## Europäisches Patentamt

## European Patent Office

## Office européen des brevets

(19)

(11) Veröffentlichungsnummer: **0 141 391**
**B1**

(12) **EUROPÄISCHE PATENTSCHRIFT**

(45) Veröffentlichungstag der Patentschrift:
**25.11.87**

(51) Int. Cl.⁴: **G 03 B 27/46**, G 03 B 27/73

(21) Anmeldenummer: **84112978.6**

(22) Anmeldetag: **27.10.84**

(54) **Verfahren zur Überwachung der Synchronität des Filmlaufs und der Messdaten in einem Rollenkopiergerät und Rollenkopiergerät.**

(30) Priorität: **04.11.83 DE 3339990**

(43) Veröffentlichungstag der Anmeldung:
**15.05.85 Patentblatt 85/20**

(45) Bekanntmachung des Hinweises auf die Patenterteilung:
**25.11.87 Patentblatt 87/48**

(84) Benannte Vertragsstaaten:
**CH DE GB IT LI**

(56) Entgegenhaltungen:
**DE-A-1 914 360**
**GB-A-2 099 598**
**US-A-4 264 197**

**PATENTS ABSTRACTS OF JAPAN, Band 6, Nr.
179(P-142) 1057 , 14. September 1982**

(73) Patentinhaber: **Agfa- Gevaert AG, Patentabteilung,
D-5090 Leverkusen 1 (DE)**

(72) Erfinder: **Benker, Gerhard, Haydnstrasse 1, D-8023
Pullach (DE)**
Erfinder: **Treiber, Helmut, Dr., Bertelestrasse 67,
D-8000 München 71 (DE)**

## Beschreibung

Die Erfindung betrifft ein Verfahren zur Überwachung der Synchronität des Filmlaufs und der Meßdaten in einem Rollenkopiergerät nach dem Oberbegriff des Anspruchs 1 und ein Rollenkopiergerät zur Durchführung dieses Verfahrens.

Aus der deutschen Patentschrift 19 14 360 ist ein Rollenkopiergerät bekannt, bei dem die Farbdichtewerte jeweils eines ganzen Filmes gemessen und ausgewertet werden, bevor der Kopiervorgang für die erste Kopiervorlage dieses Films ausgeführt wird. Auf diese Weise stehen die Meßwerte des gesamten Filmes zur Verfügung, wodurch eine genauere Bestimmung der Kopierlichtmengen möglich wird. Zur Aufnahme des Films zwischen Meß- und Kopierstation ist ein Filmspeicher vorgesehen, der so bemessen ist, daß gerade der längste der im normalen Betrieb auftretenden Einzelfilme in dem Speicher Platz findet. Um auch für unterschiedliche Filmlängen gerüstet zu sein, kann der Speicher durch einen verschiebbaren Rollensatz in seiner Aufnahmekapazität veränderbar sein.

Diese Ausgestaltung des Filmspeichers geht davon aus, daß in einer zu verarbeitenden Filmrolle zunächst nur Filme einer bestimmten Länge enthalten sind. Bei einer Änderung dieser Filmlänge ist der Filmspeicher umzustellen.

Der praktische Kopierbetrieb erfordert jedoch, daß Filme unterschiedlicher Länge zu einem Filmstreifen wahlweise zusammengefaßt werden können. Insbesondere bei der Filmkonfektionierung 135 können dabei Filme mit 36 Kopiervorlagen, mit 24 Kopiervorlagen und mit 12 Kopiervorlagen des Formats 24 x 36 mm vermischt auftreten. In ungünstigen Fällen können auch Teilstücke gerissener Filme mit noch kürzerer Länge in der Rolle enthalten sein. Dies führt dazu, daß in dem Bereich zwischen der Abtaststation und der Kopierstation, d. h. dem Speicherbereich, mehr als eine Klebestelle enthalten sein kann. Damit entstehen Probleme, d. h., es besteht die Gefahr, daß einem Filmstreifen in der Kopierstation Meßdaten zugeordnet werden, die in der Meßstation an einem anderen Filmstreifen gemessen wurden.

Aufgabe der Erfindung ist es, ein Verfahren zu schaffen, das Kopiervorlagen und Meßdaten, bzw. daraus errechnete Kopierwerte in der Kopierstation richtig zusammenführt, d. h., Fehlzuordnungen mit größtmöglicher Wahrscheinlichkeit vermeidet.

Diese Aufgabe wird gelöst durch das Verfahren gemäß Anspruch 1 und bei einem Rollenkopiergerät gemäß Anspruch 5.

Durch Schaffung einer definierten Weglänge zwischen den Fühlern für Klebestellen in der Meßstation und in der Kopierstation mittels eines Überführens des Filmspeichers in die Mindestfüllstellung kann durch Messen der zurückgelegten Weglänge in der Kopierstation der Weg einer Klebestelle von der Meßstation zur Kopierstation genau verfolgt werden, so daß eine sichere Aussage über das Eintreffen eben dieser Klebestelle in der Kopierstation gemacht werden kann. Diese sichere Aussage ist auch dann möglich, wenn z. B. durch eine Vielzahl kurzer Filmstücke zwischen der Meß- und der Kopierstation mehr als eine Klebestelle vorhanden ist. Dieser Vorgang ist auch dann durchführbar, wenn z. B. im Zuge von Reparaturarbeiten der Film in der Kopierstation vor- und zurückgefahren wurde oder sonstige Manipulationen vorgenommen wurden. Nach einer Ausgestaltung der Erfindung ist dies auch als routinemäßige, stichprobenartige Überprüfung möglich.

Weitere Einzelheiten und Vorteile der Erfindung ergeben sich aus den Unteransprüchen im Zusammenhang mit der Beschreibung eines Ausführungsbeispiels, das ausgehend von Figuren der bekannten Einrichtung anhand der Zeichnung eingehend erläutert ist. Es zeigen:

Fig. 1 ein Prinzipbild eines bekannten Kopiergerätes,

Fig. 2 einen zum Kopieren vorgesehenen Filmstreifen mit Klebestelle und

Fig. 3a bis 3e verschiedene Phasen eines Vorgangs zur Überwachung der Synchronität beim Transport des Films von der Meßstation zur Kopierstation.

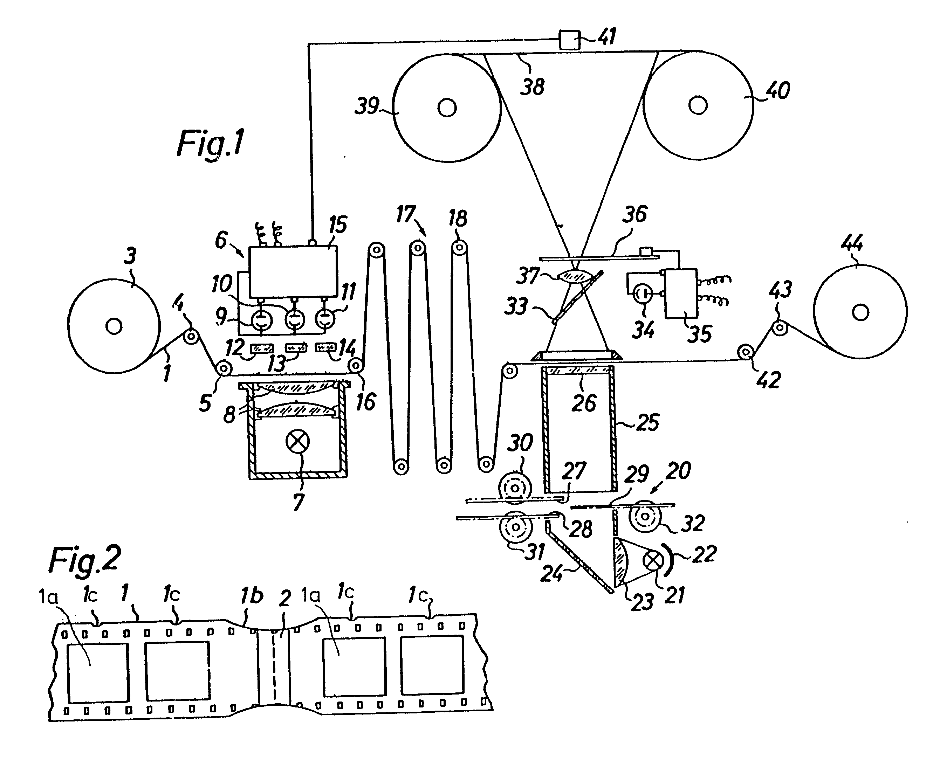

In Fig. 1 ist ein aus der deutschen Patentschrift 19 14 360 bekanntes Kopiergerät dargestellt, bei dem ein aus vielen Filmstreifen zu einem langen Band zusammengefügter Film 1 von einer Abwickelrolle 3 über Umlenkrollen 4, 5, 16, einen Speicher 17 mit Umlenkrollen 18 und weitere Umlenkrollen 42, 43 zu einer Aufwickelspule 44 geführt ist. In einer Meßstation 6 wird mittels fotoelektrischer Zellen 9, 10 und 11 mit entsprechenden Farbfiltern 12, 13, 14 aufgrund der Durchleuchtung mittels einer Lichtquelle 7 in einem Gehäuse und einem Kondensor 8 der durchlaufende Film auf seine Dichte gemessen. Die Meßwerte werden in einer Auswerteschaltung 15 verwertet und an eine Belichtungssteuervorrichtung 41 weitergeleitet. In der Kopierstation 19 ist eine Lichtquelle 21 mit einem Reflektor 22 und einem Kondensor 23, einem Umlenkspiegel 24 vor einem Mischschacht 25 angeordnet, der an seiner Austrittsseite eine Streuscheibe 26 aufweist. Vor dem Mischschacht liegen subtraktive Farbfilter 27, 28 und 29 maximaler Dichte, die von Servomotoren 30, 31 und 32 mehr oder weniger weit in den Strahlengang eingeschoben werden können. Hinter dem Kopierfenster wird ein Teil des Kopierlichtes durch einen teildurchlässigen Spiegel 33 auf eine weitere vorlagenindividuell wirkende Meßeinrichtung 34, 35 geworfen, die einen Verschluß 36 steuert. Durch ein Objektiv 37 wird die Vorlage in dem Kopierfenster auf ein Kopiermaterialband 38 abgebildet, das von einer Abwickelspule 39 zu einer Aufwickelspule 40 geführt ist.

Gemäß Fig. 2 weist der zu kopierende Film 1 Vorlagenfelder 1a auf, die gemäß Fig. 2 quadratisch sein, jedoch auch das Langformat 24 x 36 oder das Halbformat 18 x 24 mm haben können. Jeweils den Vorlagen 1a sind lagemäßig zugeordnet Bildkerben 1c, die für die Positionierung der Vorlage im Kopierfenster dienen. Jeweils an der Stoßstelle zwischen zwei aufeinanderfolgenden Filmen befindet sich eine Klebestelle, bei der z. B. die beiden Filmenden mittels eines Klebebandes 2 verbunden sind. An der Klebestelle ist der Film außerdem beidseitig mit je einer halbmondförmigen Aussparung 1b versehen. Die Filmklebestellen können durch geeignete Fühler im Gerät abgetastet werden. Dies können entweder Infrarotlichtschranken sein, die auf das Klebeband 2 ansprechen oder Lichtschranken oder mechanische Fühler, die die beidseitigen halbmondförmigen Ausschnitte 1b erfassen.

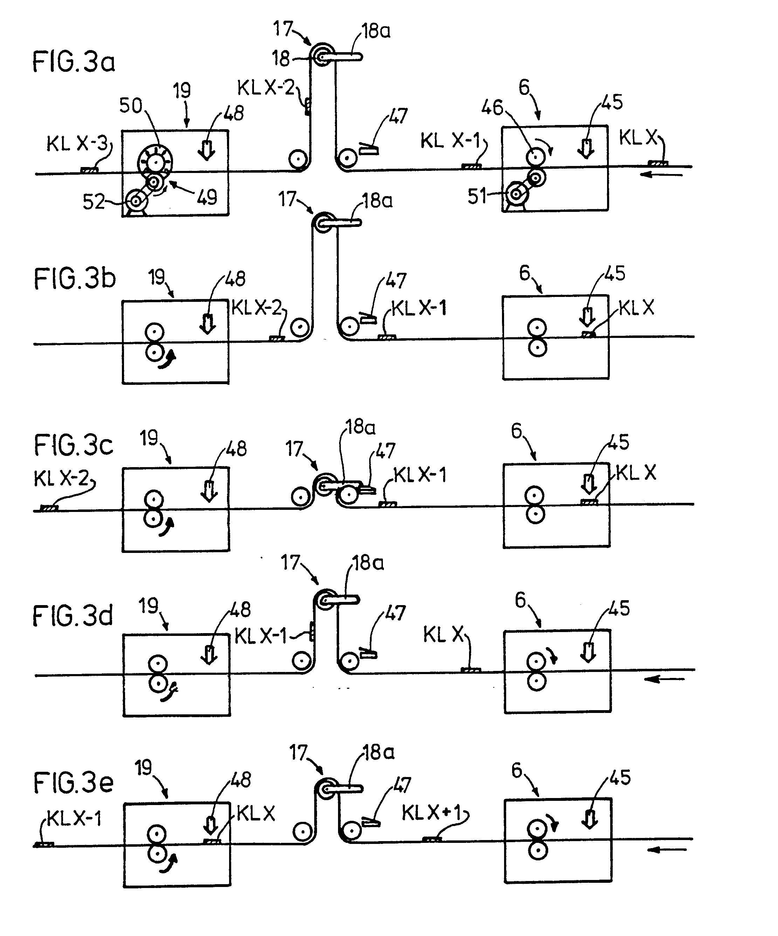

Zur sicheren Übergabe der Meßwerte von der Meßstation 6 an die Belichtungssteuervorrichtung in Zuordnung zu den Kopiervorlagen sind in einer erfindungsgemäßen Ausgestaltung eines Kopiergerätes, das in Fig. 3 schematisch dargestellt ist, noch folgende Baugruppen vorhanden:

In der Meßstation 6 ist zusätzlich ein Fühler 45 für Klebestellen des Filmbandes vorgesehen. Ein Filmtransport 46 wird von einem Motor 51 angetrieben. Der Speicher 17 enthält eine obere Umlenkrolle 18, die unter Federspannung sich von oben nach unten und umgekehrt bewegen kann, um den zwischen den beiden Stationen befindlichen Film 1 gespannt zu halten. An der Halterung der Rolle 18 befindet sich ein Arm 18a, der in der in Fig. 3c gezeigten unteren Endstellung der Rolle 18 einen Mikroschalter 47 betätigt. Diese untere Endstellung der Rolle 18 markiert den minimalen Füllgrad des Speichers 17.

Ferner ist in der Kopierstation ein Fühler 48 für die Klebestellen (16) vorgesehen sowie eine Filmantriebseinrichtung 49 mit einem Walzenpaar, das über einen Motor 52 angetrieben ist. Mit einer der Walzen ist fest gekuppelt eine Transportlängenmeßeinrichtung, z. B. eine Schlitzscheibe 50, deren Teilungen durch eine nicht dargestellte Lichtschrankenanordnung abgetastet werden können. Diese Transportlängenmeßeinrichtung gibt Impulse für jeden zurückgelegten Schritt, so daß Transportlängen durch eine einem Impulszähler vorgegebene Schrittzahl gemessen werden können.

Die an dem Filmband 1 vorhandenen Klebestellen werden mit dem Buchstaben Kl bezeichnet, wobei die noch vor der Meßstation 6 stehende Klebestelle mit dem Index x, d. h. mit $Kl_x$ bezeichnet ist. Die in Durchlaufrichtung nächste Klebestelle hat die Bezeichnung $Kl_{x-1}$, weitere Klebestellen haben die Bezeichnungen $Kl_{x-2}$ und $Kl_{x-3}$. Ausgehend von dieser in Fig. 3a gezeigten Situation soll ein Überwachungsvorgang durchgeführt werden, der sicherstellt, daß Meßwerte der Meßstation 6 auch sicher dem zugehörigen Filmstreifen in der Kopierstation 19 zugeordnet werden. Dazu wird ein Programm aufgerufen, das von einem nicht dargestellten Rechner in verschiedenen Schritten abläuft, die in Figuren 3a-e dargestellt sind. In der Phase 3b hat die Klebestelle $Kl_x$ den Fühler 45 erreicht und führt zum Stillsetzen des Transportmotors 51. Die Klebestelle $Kl_x$ bleibt damit im Fühler 45 stehen. Gleichzeitig setzt die Transporteinrichtung 49 den Filmtransport durch die Kopierstation fort, wobei für Ersteinläufe oder nach Auftreten eines Fehlers zweckmäßigerweise der Kopiervorgang sofort beendet wird und der weitere Filmdurchlauf ohne Kopieren erfolgt. Diese Phase mit stehendem Filmtransport 46 und Fortsetzen des Filmtransports in der Kopierstation ist durch Fehlen eines Pfeils bei 46 und einen Pfeil bei 49 dargestellt.

Durch den fortgesetzten Filmtransport in der Kopierstation wird laufend Film aus dem Speicher 17 entnommen, was zum Erreichen der Minimalfüllung gemäß Fig. 3c führt, wodurch der Mikroschalter 47 durch den Arm 18a betätigt wird. Die Betätigung des Mikroschalters 47 hat zur Folge, daß ein Zähler der Transportlängenmeßeinrichtung 50 auf Null gesetzt wird und von nun an die Transportlänge mißt. Gleichzeitig wird der Transport 46 wieder eingeschaltet und der Transport 49 läuft weiter. Da die Geschwindigkeit des Transports 46 in der Abtaststation 6 höher ist als der in der Kopierstation, füllt sich gemäß Fig. 3d der Speicher 17 wieder. Mit dem Betätigen des Mikroschalters 47 wird an dem in der Transportlängenmeßeinrichtung 50 enthaltenen Zähler ein Überwachungsfenster aktiviert, das zunächst den Klebestellenfühler 48 unwirksam macht. Das Überwachungsfenster hat etwa die Ausdehnung einer Klebestelle und beginnt in einer Entfernung von dem Fühler 48, die dem Abstand (bezüglich Filmlänge) zwischen Fühler 48 und dem Fühler 45 bei minimaler Speicherfüllung gemäß Figur 3c entspricht.

Mit dem Wiederanlauf der beiden Filmtransporteinrichtungen gemäß Fig. 3d wird der Mikroschalter 47 wieder geöffnet und die Klebestelle $Kl_x$ wandert in Richtung des Abtasters 48. Dazwischen liegt jedoch die Klebestelle $KL_{x-1}$, die aber wegen der Sperrung des Fühlers 48 keine Wirkung erzielt.

Erreicht jedoch die Klebestelle $Kl_x$ den Fühler 48, so hat die Transportlängenmeßeinrichtung 50 gerade den Fühler 48 im Überwachungsfenster aktiviert, so daß das Signal des Fühlers 48 weitergegeben wird. Damit ist bereits sichergestellt, daß die Klebestelle $Kl_x$ diejenige ist, die zu Beginn des Überwachungsvorgangs an dem Fühler 45 erfaßt wurde. Damit wird die Übergabe der Meßwerte für die in Durchlaufrichtung hinter der Klebestelle $Kl_x$ liegenden Vorlagen in die Belichtungssteuervorrichtung freigegeben, so daß dann mit dem wieder beginnenden Kopiervorgang für die hinter der Klebestelle $Kl_x$ liegenden Vorlagen die richtigen Meßdaten vorliegen. Dieses Ergebnis wird auch nicht beeinflußt, wenn bis zum Einlaufen der Klebestelle $Kl_x$ an dem Fühler 48 weitere Klebestellen $Kl_{x+1}$ den Fühler 45 passiert haben. Die für die danach liegenden Kopiervorlagen ermittelten Meßwerte werden gespeichert und dann in der Reihenfolge der den Fühler 48 passierenden Klebestellen in die Kopierstation weitergegeben.

Erreicht innerhalb des Überwachungsfensters keine Klebestelle den Fühler 48, kann ein Warnsignal abgegeben werden.

Der beschriebene Vorgang ist zunächst vorgesehen als Erstüberwachung beim Einlauf eines neuen Filmes oder bei erkennbaren Unregelmäßigkeiten, z. B. nach Reparaturvorgängen oder bei anderweitigem Zurückfahren des Films in der Filmbühne der Kopierstation. Mit einer geringen Abwandlung kann dieser Vorgang auch routinemäßig stichprobenartig, z. B. bei jeder zehnten Klebestelle, durchgeführt werden. Dann darf allerdings weder der Kopiervorgang unterbunden noch der Fühler 48 gesperrt werden. Das Überwachungsfenster wird dann nur insoweit wirksam, daß kontrolliert wird, ob in dem Überwachungsbereich auch tatsächlich eine Klebestelle den Fühler 48 passiert. Ist dies nicht der Fall, kann ein Warnsignal an den Bediener zur Überprüfung des Gerätes abgegeben werden.

Die Funktion der erfindungsgemäßen Überwachung der Synchronität ist dabei unabhängig von der Art der jeweils verwendeten Klebestellenfühler oder der Transportlängenmeßeinrichtung 50. Zum Beispiel könnte anstelle der Schlitzscheibe auch der Motor 52 als Schrittschaltmotor ausgebildet sein, und die Transportlängenmeßeinrichtung ist dann einfach als Schrittzähler ausgebildet.

## Patentansprüche

1. Verfahren zur Überwachung der Synchronität des Filmlaufs und der Meßdaten in einem Rollenkopiergerät mit einer Meßstation (6), einer Kopierstation (19) und einem dazwischen liegenden Speicher (17) variabler Füll-Länge, **dadurch gekennzeichnet,** daß zur Einleitung der sicheren Zuordnung von Meßdaten und Vorlagen (1a) die erste durch die Meßstation durchlaufende Filmklebestelle mit einem ersten Klebestellenfühler (45) wahrgenommen und angehalten wird, die Füll-Länge des Filmspeichers durch Transportieren des Films durch die Kopierstation auf einen vorgegebenen Mindestwert verringert wird, in der Kopierstation eine Filmtransportlängenmessung begonnen und gleichzeitig in der Meßstation der Filmtransport mit einer mindestens der Transportgeschwindigkeit in der Kopierstation entsprechenden Geschwindigkeit fortgesetzt wird, der Film in der Kopierstation mit einem zweiten Klebestellenfühler (48) an einer Filmstelle, die sich bei Beginn der Transportlängenmessung in einer der genannten Mindestfüll-Länge entsprechenden Filmlängendistanz von dem zweiten Klebestellenfühler (48) entfernt in der Filmmeßstation befand, auf Anwesenheit der genannten ersten Filmklebestelle überprüft wird.

2. Verfahren nach Anspruch 1, dadurch gekennzeichnet, daß sich die Filmstelle in einem einem Überwachungsfenster entsprechenden Filmbereich befindet, der insbesondere die Länge einer Filmklebestelle aufweist.

3. Verfahren nach Anspruch 1 oder 2, dadurch gekennzeichnet, daß zwischen dem Beginn der Filmtransportlängenmessung und dem Eröffnen des Überwachungsfensters die Abtastung von Klebestellen in der Kopierstation gesperrt bleibt und der Film ohne Bearbeitung durch die Kopierstation transportiert wird.

4. Verfahren nach einem der Ansprüche 1 bis 3, dadurch gekennzeichnet, daß am Ende des Überwachungsfensters ohne Eintreffen eines Klebestellensignals des Fühlers in der Kopierstation der Transport stillgesetzt und ein Warnsignal abgegeben wird.

5. Verfahren nach Anspruch 1, dadurch gekennzeichnet, daß die Überwachung der Synchronität während des Kopierbetriebes stichprobenartig wiederholt wird unter Fortsetzung des Kopierens und Erfassens von Klebestellen an dem Fühler in der Kopierstation und daß bei Ausbleiben von Klebestellen im Bereich des Überwachungsfensters am Fühler der Kopierstation ein Warnsignal abgegeben wird.

6. Verfahren zum Zuordnen der Meßdaten zu den Kopiervorlagen eines Filmstreifens mit mehreren durch Klebestellen verbundenen Filmen unterschiedlicher Länge in der Kopierstation eines Rollenkopiergeräts mit einer Meßstation, einer Kopierstation und einem dazwischen liegenden Speicher variabler Füll-Länge, dadurch gekennzeichnet, daß zur Einleitung des Zuordnungvorganges die erste durch die Meßstation durchlaufende Filmklebestelle mit einem Klebestellenfühler (45) wahrgenommen und angehalten wird, die Füll-Länge des Filmspeichers durch Transportieren des Films durch die Kopierstation auf einen vorgegebenen Mindestwert verringert wird, dann in der Meßstation der Filmtransport mit einer mindestens der Transportgeschwindigkeit in der Kopierstation entsprechenden Geschwindigkeit fortgesetzt und gleichzeitig in der Kopierstation eine Filmtransportlängenmessung begonnen wird und daß bei Eintreffen der Klebestelle in der Kopierstation nach Zurücklegen einer Filmweglänge zwischen Meß- und Kopierstation bei Mindestfüllung des Filmspeichers die Meßwerte für die hinter der Klebestelle liegende Kopiervorlage an eine Belichtungssteuerung freigegeben werden.

7. Fotografisches Rollenkopiergerät zur Durchführung des Verfahrens nach einem der Ansprüche 1 bis 4 mit einer Führungsbahn für die aus Einzelfilmen zu langen Bändern zusammengeklebten Kopiervorlagen, mit einer an dieser Führungsbahn angeordneten Meßstation zur Erfassung der Dichtewerte einer größeren Anzahl von Kopiervorlagen jeweils eines Filmes und einem Fühler für Klebestellen zwischen aufeinanderfolgenden Einzelfilmen, mit einer Kopierstation zur Durchführung des Kopiervorgangs unter Berücksichtigung der gemessenen Dichtewerte und einem weiteren Fühler für Klebestellen und mit einem zwischen den beiden Stationen angeordneten Filmspeicher, dadurch gekennzeichnet, daß die Kapazität des Speichers (17) variabler Füll-Länge zur Aufnahme wenigstens der Hälfte des längsten üblichen Einzelfilmes ausreicht, daß in der Meßstation (6) ein durch den zugeordneten Klebestellenfühler (45) stillsetzbarer Filmtransport (46, 51), in der Kopierstation (19) ein weiterer Filmtransport (49, 52) mit einer Transportlängenmeßeinrichtung (50) vorgesehen sind, daß an dem Filmspeicher (17) ein die minimale Füll-Länge anzeigender Fühler (47) angeordnet ist, der bei Betätigung die Transportlängenmeßeinrichtung (50) in Gang setzt und den Filmtransport (46, 51) in der Meßstation (6) freigibt, und daß die Transportlängenmeßeinrichtung (50) beim Eintreffen einer Klebestelle Kl$_x$ an dem Fühler (48) in der Kopierstation (19) nach einem der Filmlänge zwischen den beiden Fühlern (45, 48) bei minimaler Speicherfüllung entsprechenden Transportlänge die Übernahme der nach dieser Klebestelle Kl$_x$ gemessenen Dichtewerte in eine Belichtungssteuervorrichtung zur Steuerung der Belichtung der nach derselben Klebestelle Kl$_x$ folgenden Vorlagen in der Kopierstation (19) freigibt.

**Claims**

1. Process for monitoring the synchronism of the film advancement and the measured data in a roll copying apparatus having a measuring station (6), a copying station (19) and, situated between the latter, a store (17) of variable filling length, characterised in that in order to induce the reliable allocation of the measured data to the originals (1a) the first film splice passing through the measuring station is detected and arrested with the aid of a first splice feeler (45), the filling length of the film store is reduced to a prescribed minimum value by transporting the film through the copying station, measurement of the transported film length is begun in the copying station and at the same time the film transport is continued in the measuring station with a speed corresponding at least to the speed of transport in the copying station, the film in the copying station is examined for the presence of the aforementioned first film splice by means of a second splice feeler (48) at a place in the film which, at the beginning of the measurement of the transported film length, was located in the film-measuring station at a film length distance from the second splice feeler (48) corresponding to the aforementioned minimum filling length.

2. Process according to Claim 1, characterised in that the place in the film is located in a film area which corresponds with a monitoring window and in particular has the length of a film splice.

3. Process according to Claim 1 or 2, characterised in that the sensing of splices in the copying station is blocked between the beginning of the measurement of the transported film length and the opening of the monitoring window and the film is transported without treatment through the copying station.

4. Process according to one of Claims 1 to 3, characterised in that if, at the end of the monitoring window, no splice signal of the feeler in the copying station has been received, the transport is stopped and a warning signal is delivered.

5. Process according to Claim 1, characterised in that the monitoring of the synchronism during the copying operation is repeated at random, while copying and the detection of splices by the feeler in the copying station are continued, and in that if no splices appear in the region of the monitoring window at the feeler of the copying station a warning signal is delivered.

6. Process for allocating measure data to the originals to be copied of a film strip comprising several films of varied length joined by splices, in the copying station of a roll copying apparatus having a measuring station, a copying station and, situated between the latter, a store of variable filling length, characterised in that in order to induce the allocation process the first film splice passing through the measuring station is detected and arrested with the aid of a splice feeler (45), the filling length of the film store is reduced to a prescribed minimum value by transporting the film through the copying station, then the film transport is continued in the measuring station with a speed corresponding at least to the speed of transport in the copying station and at the same time measurement of the transported film length is begun in the copying station and in that when the splice arrives in the copying station after having covered a film path length equal to that between the measuring station and the copying station for a minimum filling of the film store, the measured values for the original to be copied lying upstream of the splice are released to an exposure control device.

7. Photographic roll copying apparatus for carrying out the process according to one of Claims 1 to 4, having a guideway for the originals to be copied consisting of individual films spliced together to form long strips, having a measuring station arranged along this guideway for detecting the density values of a relatively large number of originals to be copied of a particular film and a feeler for splices between consecutive individual films, having a copying station for carrying out the copying process according to the measured density values and a second feeler for splices and having a film store arranged between the two stations, characterised in that the capacity of the store (17) of variable filling length is sufficient to receive at least half of the longest standard individual film, in that a film transporting device (46, 51), which can be stopped by the corresponding splice feeler (45) is provided in the measuring station (6), a further film transporting device (49, 52) with a device (50) for measuring the transported film length is provided in the copying station (19), in that a feeler (47) indicating the minimum filling length is arranged in the film store (17), which feeler (47), on being actuated, sets in operation the device (50) for measuring the transported film length and releases the film transporting device (46, 51) in the measuring station (6), and in that, upon the arrival of a splice $KI_x$ at the feeler (48) in the copying station (19) after a transported length corresponding to the film length between the two feelers (45, 48) for a minimum filling of the store, the device (50) for measuring the transported film length releases the transfer of the density values measured after this splice $KI_x$ to an exposure control device for controlling the exposure in the copying station (19) of the originals following this same splice $KI_x$.

**Revendications**

1. Procédé pour surveiller la synchronisation du mouvement des films et des données de mesure dans un appareil de copiage à rouleau comprenant une sstation de mesure (6), une station de copiage (19) et un accumulateur (17) de longueur de remplissage variable se trouvant entre elles, caractérisé en ce que, pour l'amorçage de la classification fiable de données de mesure et de copies (1a), le premier emplacement de collage de film traversant la station de mesure est perçu et maintenu par un premier détecteur (45) d'emplacement de collage, la longueur de remplissage de l'accumulateur de film est réduite par transport du film à travers la station de copiage à une valeur minimale prédéterminée, dans la station de copiage une mesure de la longueur de transport du film est débutée et en même temps dans la station de mesure, le transport du film est continué avec une vitesse correspondant au moins à la vitesse de transport dans la station de copiage, le film dans la station de copiage est surveillé pour ce qui concerne la présence du premier emplacement de collage du film avec un deuxième détecteur (48) d'emplacement de collage à un emplacement de film qui se trouvait dans la station de mesure de film au début de la mesure de longueur de transport à une distance de longueur de film correspondant à la longueur de remplissage minimale mentionnée, éloignée du deuxième détecteur (48) d'emplacement de collage.

2. Procédé selon la revendication 1, caractérisé en ce que l'emplacement du film se trouve dans une zone de film correspondant à une fenêtre de surveillance et qui présente en particulier la longueur d'un emplacement de collage de film.

3. Procédé selon la revendication 1 ou la revendication 2, caractérisé en ce que, entre le début de la mesure de longueur de transport de film et l'ouverture de la fenêtre de surveillance, la détection des emplacements de collage dans la station de copiage demeure bloquée et le film est transporté sans traitement à travers la station de copiage.

4. Procédé selon l'une des revendications 1 à 3, caractérisé en ce que, à l'extrémité de la fenêtre de surveillance, s'il n'y a pas arrivée d'un signal d'emplacement de collage du détecteur dans la station de copiage, le transport est arrêté et un signal d'avertissement est délivré.

5. Procédé selon la revendication 1, caractérisé en ce que la surveillance de la synchronisation pendant le copiage est répétée à la façon d'un sondage en continuant le copiage et en détectant des emplacements de collage au niveau du détecteur dans la station de copiage et en ce que, lors de l'absence d'emplacements de collage au voisinage de la fenêtre de surveillance au niveau du détecteur de la station de copiage, un signal d'avertissement est délivré.

6. Procédé pour classer les valeurs de mesure par rapport aux exemplaires de copiage d'une bande de film ayant plusieurs films reliés par des emplacements de collage, de longueur différente, dans la station de copiage d'un appareil de copiage à rouleau, comprenant une station de mesure, une station de copiage et un accumulateur de longueur de remplissage variable se trouvant entre elles, caractérisé en ce que, pour l'amorçage du processus de classement, le premier emplacement de collage de film passant par la station de mesure est perçu et maintenu avec un détecteur (45) d'emplacements de collage, la longueur de remplissage de l'accumulateur de film est réduit par transport du film à travers la station de copiage à une valeur minimale prédéterminée, ensuite dans la station de mesure, le transport du film est continué à une vitesse correspondant au moins à la vitesse de transport dans la station de copiage et en même temps, dans la station de copiage, on débute une mesure de la longueur de transport du film, et en ce que, lors de l'arrivée de l'emplacement de collage dans la station de copiage, après parcours d'une longueur de trajet de film entre la station de mesure et la station de copiage, et lors d'un remplissage minimal de l'accumulateur de film, les valeurs de mesure pour l'exemplaire de copiage se trouvant derrière l'emplacement de collage sont fournies à une commande d'exposition.

7. Appareil photographique de copiage à rouleau pour mettre en oeuvre le procédé selon l'une des revendications 1 à 4, comprenant un trajet de guidage pour les exemplaires de copiage collés en longues bandes à partir de films individuels, une station de mesure disposée sur ce trajet de guidage pour détecter les valeurs de densité d'un assez grand nombre d'exemplaires de copiage d'un film respectif et un détecteur pour les emplacements de collage entre des films individuels qui se suivent, une station de copiage pour réaliser le processus de copiage en tenant compte des valeurs de densité mesurées et un autre détecteur pour des emplacements de collage, ainsi qu'un accumulateur de film disposé entre les deux stations, appareil caracterisé en ce que la capacité de l'accumulateur (17) de longueur de remplissage variable suffit pour recevoir au moins la moitié du film habituel individuel le plus long, en ce que dans la station de mesure (6), un transport de film (46, 51) qu'on peut arrêter par le detecteur (45) associé d'emplacement de collage et dans la station de copiage (19) un autre transport de film (49, 52) avec un dispositif (50) de longueur de transport sont prévus, en ce que sur l'accumulateur de film (17), on dispose d'un détecteur (47) montrant la longueur minimale de remplissage et qui, lors de l'actionnement, met en route le dispositif (50) de mesure de longueur de transport et libère le transport de film (46, 51) dans la station de mesure (6), et en ce que le dispositif (50) de mesure de longueur de transport, lorsqu'arrive à l'emplacement de collage $KI_x$ au niveau du détecteur (48) dans la station de copiage (19), après une longueur de transport correspondant à la longueur de film entre les deux détecteurs (45, 48) lorsque le remplissage de l'accumulateur est minimal, libère le transfert des valeurs d'intensité mesurées après cet emplacement de collage $KI_x$ à un dispositif de commande d'exposition pour commander l'exposition des copies suivantes après le même emplacement de collage $KI_x$ dans la station de copiage (19).

Fig.1

Fig.2

FIG.3a

FIG.3b

FIG.3c

FIG.3d

FIG.3e